# EUROPEAN PATENT SPECIFICATION

(11) **EP 2 646 750 B1**
(45) Date of publication and mention of the grant of the patent: **21.12.2016**
(21) Application number: 11784848.1
(22) Date of filing: 28.10.2011
(51) Int. Cl.: H05B 37/02, F21V 23/02, F21V 23/06, F21V 23/04, F21W 131/10

(54) **DIMMABLE OUTDOOR LUMINAIRES**
DIMMBARE AUSSENLEUCHTE
LUMINAIRES EXTÉRIEURS À INTENSITÉ RÉGLABLE

(30) Priority: 03.12.2010 US 959921
(43) Date of publication of application: 09.10.2013
(73) Proprietor: General Electric Company, Schenectady, NY 12345 (US)
(72) Inventor: ILYES, Laszlo, Sandor, East Cleveland, OH 44112 (US); PRASAD, Himamshu, Ulsoor Bangalore 560 008 (IN); CREIGHTON, Jason, D, East Cleveland, OH 44112 (US); COSBY, Melvin, C, Cleveland, OH 44112 (US)
(74) Representative: Foster, Christopher Michael
(86) International application number: PCT/US2011/058234
(87) International publication number: WO 2012/074641

(56) References cited:
- EP-A2- 2 149 746
- US-A1- 2006 193 151
- US-A1- 2008 068 841
- US-B1- 7 828 463

## Description

### BACKGROUND OF THE DISCLOSURE

Outdoor lighting systems are typically configured with a cobra head type horizontal fixture with a ballast or driver powering a lamp or LED array to illuminate a roadway, parking lot, building exterior, or other outdoor area. The cobra head fixture is often equipped with a photo eye (PE) sensor or detector that detects sunrise and sunset conditions for turning the light off or on, respectively. The widely adopted standard for outdoor lighting fixtures includes an EEI/NEMA standard 3-terminal polarized twist-lock receptacle mounted to the top of the cobra head fixture, with the PE detector housed in a module that plugs into the twist-lock receptacle and which allows rotation of the PE module so that the photo sensor faces generally North. The PE module includes a three-terminal twist-lock type connector coupleable to the twist-lock receptacle to provide three class 1 electrical connections between the controller module and the fixture assembly. In operation, the fixture is wired with the AC line connection wired from the fixture conduit to one terminal of the twist-lock receptacle and the input neutral wired to a second terminal of the twist-lock receptacle. The third twist-lock receptacle wire is connected to the light source ballast or driver and the PE module provides a switch connection between the input line wire and the third twist-lock receptacle wire for selective connection/disconnection of power to/from the ballast or driver. This configuration allows easy replacement of the PE module, and such apparatus as served outdoor public areas as well as industrial, commercial, and residential lighting needs for many years. However, improved energy utilization is desirable by which outdoor lighting fixtures can be intelligently used to provide lighting without consuming excessive energy.

US 7828463 describes a method and apparatus to control a lighting source such as a streetlight and to modulate the output of the lighting source so that artificial illumination is reduced when moonlight is available to illuminate the area. The apparatus includes a sensor assembly for detecting moonlight in the night sky, an electronic circuit for processing the sensor signals in combination with moonrise and moonset data, and modulating the power applied to the lighting source in response to the intensity of the incident moonlight.

### SUMMARY OF THE DISCLOSURE

The present disclosure provides methods and lighting fixture apparatus for outdoor lighting in which dimmable outdoor lighting can be implemented using the conventional 3-terminal twist-lock receptacle or the orifice used to accommodate the conventional NEMA socket to facilitate retrofit of existing installations and construction of new lighting apparatus using existing components.

The invention resides in a dimmable outdoor lighting fixture apparatus and in a method of operating thereof as defined in the appended claims.

In certain embodiments, the dimming component selectively provides the dimming control value based at least partially on a sensed motion signal or value from a motion sensor.

In certain embodiments, the dimming component selectively provides the dimming control value based at least in part on a received RF signal or value from an external RF device.

In certain embodiments, the ballast or driver includes a power line communication (PLC) component to receive digital signals from a power line via the twist-lock receptacle, and the controller includes a power line communication (PLC) component to transmit the dimming control value as a digital signal on the power line. In certain embodiments, the fixture assembly includes a power line communication (PLC) module to receive the digital signals from the power line via the twist-lock receptacle, which provides an analog dimming signal to the ballast or driver based on the received digital signals.

In certain embodiments, a phase-cut ballast or driver is provided with a power circuit operative to receive a phase-cut power signal from a power line via the twist-lock receptacle and to selectively dim the output from the light source according to the phase-cut power signal. The controller module includes a phase-cut switching device (PCS) operative to generate the phase-cut power signal based at least in part on a dimming control value from the dimming component.

In certain embodiments, an RF enabled ballast or driver is provided, having a radio frequency (RF) receiver that receives a dimming control value from the controller module through the twist-lock receptacle, where the controller module includes an RF transmitter coupled with the dimming component to transmit the dimming control value as an RF signal through the twist-lock receptacle. In certain embodiments, the fixture assembly includes an RF module operative to receive the dimming control value from the controller module through the twist-lock receptacle and to provide an analog dimming signal to the ballast or driver based on the received dimming control value.

In certain embodiments, the three-terminal twist-lock receptacle is modified to include a fourth terminal and the ballast or driver includes at least two power inputs coupled with terminals of the twist-lock receptacle. The ballast or driver provides multilevel output from the light source according to the power levels of the power inputs and where the controller module controls the power levels of the power inputs through the twist-lock receptacle.

In certain embodiments, the twist-lock receptacle is modified to include a fourth terminal and the fixture assembly includes first and second light sources supported in the fixture housing and corresponding first and second ballasts or drivers with power inputs, where the controller module controls the power levels of the power inputs through the twist-lock receptacle.

In certain embodiments, the twist-lock receptacle is modified to include a fourth terminal, the light source is a high intensity discharge (HID) lamp, and the ballast or driver is a constant wattage autotransformer (CWA) HID ballast. The fixture assembly in these embodiments includes a relay having a coil circuit with at least one power input coupled with a terminal of the twist-lock receptacle, and a capacitor coupled between a relay contact terminal and a control terminal of the CWA HID ballast. The controller module controls the power level of the power input through the twist-lock receptacle to selectively cause the relay to couple the capacitor with the CWA HID ballast to provide dimmable output from the HID lamp.

In certain embodiments, the twist-lock receptacle is modified to include a fourth terminal and the ballast or driver is a dimmable ballast or driver. In these embodiments, the fixture assembly includes a relay having a coil circuit with a power input coupled to a receptacle terminal and a resistor coupled between a relay contact and a control terminal of the dimmable ballast or driver. The controller module controls the power input through the twist-lock receptacle to selectively cause the relay to couple the resistor with the dimmable ballast or driver to provide dimmable output from the light source.

In certain embodiments, the twist-lock receptacle is modified to include a fourth opening with a pair of class 2 wires extending therethrough, and the dimming component selectively provides the dimming control value to the ballast or driver as an analog or digital signal through the twist-lock receptacle using the class 2 wires to cause the ballast or driver to provide dimmable output from the light source.

In certain embodiments, the twist-lock receptacle includes an optical channel for transmission of optical signals through the twist-lock receptacle. The ballast or driver includes an optical receiver to receive a dimming control value from the controller module through the optical channel and the controller module includes an optical transmitter operatively coupled with the dimming component to transmit the dimming control value as an optical signal through the optical channel of the twist-lock receptacle.

In certain embodiments, the controller module comprises a feedback circuit to sense at least one power condition and the dimming component selectively adjusts the dimming control value based at least in part on the power condition.

In certain embodiments, a two-terminal connector is provided in the twist-lock receptacle with first and second wires coupled with the first and second connector terminals. The ballast or driver is dimmable with the dimming component selectively providing a dimming control value through the connector via the first and second wires to cause the ballast or driver to provide dimmable output from the light source. In certain implementations the first connector terminal is a cylindrical structure and the first and second terminals are coaxial relative to one another. In certain embodiments, moreover, the connector is located at the center of the twist-lock receptacle to facilitate rotatable engagement of a corresponding connector of the controller module while allowing rotational twisting engagement of the male blades of the controller module blades with the corresponding slot terminals in the upper surface of the receptacle.

A dimmable outdoor lighting fixture apparatus is provided, having a luminaire fixture assembly with a fixture housing that includes a socket mounting structure with a hole adapted to receive a twist-lock receptacle, along with one or more light sources and one or more ballasts or drivers supported in the fixture housing to power to the light source(s). The apparatus further includes a controller module with a controller housing having a controller mounting structure mounted to the socket mounting structure, as well as a plurality of wires extending from the controller housing interior through the hole into the fixture housing. The controller module further includes a dimming component located in the controller housing to selectively provide at least one dimming control value to the ballast or driver via wires to cause the ballast or driver to provide dimmable output from the light source.

A method is provided for operating an outdoor lighting fixture, which includes providing a light source and a ballast or driver in a luminaire fixture housing, and providing a controller module attached to the fixture housing and coupled with the ballast or driver. The method further includes providing a dimming control value to the ballast or driver from the controller module through the twist-lock receptacle to cause the ballast or driver to provide dimmable output from the light source.

The method further includes sensing ambient light and providing the dimming control value based at least in part on the sensed ambient light.

In certain embodiments, the method further includes sensing motion proximate the fixture assembly, and providing the dimming control value based at least in part on the sensed motion.

In certain embodiments, the method further includes receiving an RF signal or value from an external RF device, and providing the dimming control value based at least in part on the received RF signal or value.

In certain embodiments, the method includes providing the dimming control value based at least in part on a current time.

### BRIEF DESCRIPTION OF THE DRAWINGS

One or more exemplary embodiments are set forth in the following detailed description and the drawings, in which:
Fig. 1 is a partial sectional side elevation view illustrating an exemplary dimmable outdoor lighting fixture apparatus with a controller module providing dimming control values to a dimming ballast with a power line communication (PLC) transceiver through a twist-lock receptacle in accordance with one or more aspects of the present disclosure;
Fig. 1A is a schematic view illustrating further details of the lighting fixture apparatus of Fig. 1;
Fig. 1B is a bottom perspective view illustrating an exemplary controller module with a photo eye sensor and an EEI/NEMA standard three-terminal twist-lock type connector for use in the lighting fixture apparatus;
Fig. 1C is a partial top perspective view illustrating an exemplary EEI/NEMA standard 3-terminal polarized twist-lock receptacle with three class 1 wires mounted to the top of the outdoor lighting fixture for connection of the controller module in Fig. 1B;
Fig. 1D is a partial top plan view taken along line 1D-1D in Fig. 1, illustrating the female receptacle arrangement in the EEI/NEMA standard 3-terminal polarized twist-lock receptacle of Fig. 1C;
Fig. 2 is a partial sectional side elevation view illustrating another exemplary dimmable outdoor lighting fixture apparatus with a controller module providing dimming control values to a PLC module through a twist-lock receptacle for generating an analog dimming signal for controlling a ballast or driver;
Fig. 2A is a schematic view illustrating further details of the lighting fixture apparatus of Fig. 2;
Fig. 3 is a partial sectional side elevation view illustrating another exemplary dimmable outdoor lighting fixture apparatus with a controller module providing dimming control values to a PLC module via a phase-cut power signal through the twist-lock receptacle to control a phase-cut dimming ballast or driver;
Fig. 3A is a schematic view illustrating further details of the lighting fixture apparatus of Fig. 3;
Fig. 4 is a partial sectional side elevation view illustrating another exemplary dimmable outdoor lighting fixture apparatus with a controller module providing wireless dimming control values to an RF-enabled ballast or driver through the twist-lock receptacle;
Fig. 4A is a schematic view illustrating further details of the lighting fixture apparatus of Fig. 4;
Fig. 4B is a partial sectional side elevation view illustrating another exemplary dimmable outdoor lighting fixture apparatus with a controller module providing wireless dimming control values through the twist-lock receptacle to an RF receiver module that converts the RF message to an analog dimming signal to a dimming ballast or driver;
Fig. 4C is a schematic view illustrating further details of the lighting fixture apparatus of Fig. 4B;
Fig. 5 is a partial sectional side elevation view illustrating another exemplary dimmable outdoor lighting fixture apparatus with the twist-lock receptacle modified to include a fourth terminal with the controller providing two power signals to a bi-level ballast or driver;
Fig. 5A is a schematic view illustrating further details of the lighting fixture apparatus of Fig. 5;
Fig. 5B is a bottom perspective view illustrating an exemplary controller module with a fourth terminal for use in the lighting fixture apparatus of Figs. 5 and 5A;
Fig. 5C is a partial top perspective view illustrating a modified EEI/NEMA standard twist-lock receptacle with four class 1 wires mounted to the top of the outdoor lighting fixture for connection of the controller module in Fig. 5B;
Fig. 5D is a partial top plan view illustrating the modified twist-lock receptacle arrangement in the twist-lock receptacle of Fig. 5C;
Figs. 6 and 6A are partial sectional side elevation and schematic views illustrating another exemplary dimmable outdoor lighting fixture apparatus with the twist-lock receptacle modified to include a fourth terminal, where the controller module provides separate switched power signals to two ballasts or drivers through the twist-lock receptacle for driving two light sources for stepped dimming control;
Figs. 7 and 7A are partial sectional side elevation and schematic views illustrating another exemplary dimmable outdoor lighting fixture apparatus with the twist-lock receptacle modified to include a fourth terminal, where the controller provides separate switched power signals through the twist-lock receptacle to control a relay that selectively connects a capacitor to a constant wattage autotransformer (CWA) HID ballast to provide dimmable output from an HID lamp;
Figs. 8 and 8A are partial sectional side elevation and schematic views illustrating another exemplary dimmable outdoor lighting fixture apparatus with the twist-lock receptacle modified to include a fourth terminal, where the controller provides separate switched power signals through the twist-lock receptacle to control a relay that selectively connects a resistor to a dimming input circuit of a dimming ballast or driver;
Fig. 9 is a partial sectional side elevation view illustrating another exemplary dimmable outdoor lighting fixture apparatus with a pair of class 2 wires extending through a fourth opening in the twist-lock receptacle for providing a dimming control value to the ballast or driver as an analog or digital signal;
Fig. 9A is a partial top plan view illustrating the modified twist-lock receptacle arrangement in the apparatus of Fig. 9;
Fig. 10 is a partial sectional side elevation view illustrating another exemplary dimmable outdoor lighting fixture apparatus with the ballast or driver receiving an optical dimming control value through an optical channel in the twist-lock receptacle;
Fig. 10A is a partial top plan view illustrating the modified twist-lock receptacle and optical transmitter arrangement in the apparatus of Fig. 10;
Fig. 11 is a schematic diagram illustrating another exemplary dimmable outdoor lighting fixture apparatus with a feedback circuit that senses one or more fixture power conditions for modifying the dimming control value;
Fig. 12 is a partial sectional side elevation view illustrating another exemplary dimmable outdoor lighting fixture apparatus with a fixture housing that includes a socket mounting structure with a hole adapted to receive a twist-lock receptacle and a controller module with a controller housing having a controller mounting structure mounted to the socket mounting structure with wires extending from the controller housing interior through the hole into the fixture housing;
Fig. 13 is a partial sectional side elevation view illustrating another exemplary dimmable outdoor lighting fixture apparatus with a controller module providing dimming control values to a dimming ballast via a coaxial connection through a twist-lock receptacle in accordance with one or more aspects of the present disclosure;
Fig. 13A is a schematic view illustrating further details of the lighting fixture apparatus of Fig. 13;
Fig. 13B is a partial top plan view taken along line 13B-13B in Fig. 13, illustrating the female receptacle arrangement with a female two-contact RCA-type connector in the 3-terminal polarized twist-lock receptacle of Fig. 13; and
Fig. 13C is a sectional side elevation view of the exemplary controller module of Fig. 13 including a centrally mounted male connector for providing dimming control signals to the dimming control.

### DETAILED DESCRIPTION OF THE PREFERRED EMBODIMENTS

Referring now to the drawings, like reference numerals are used in the figures to refer to like elements throughout, and the various features are not necessarily drawn to scale. The present disclosure relates to dimmable outdoor lighting fixture apparatus and methods in which a control module provides a dimming control value through an EEI/NEMA standard 3-terminal polarized twist-lock receptacle mounted to an outdoor lighting fixture housing.

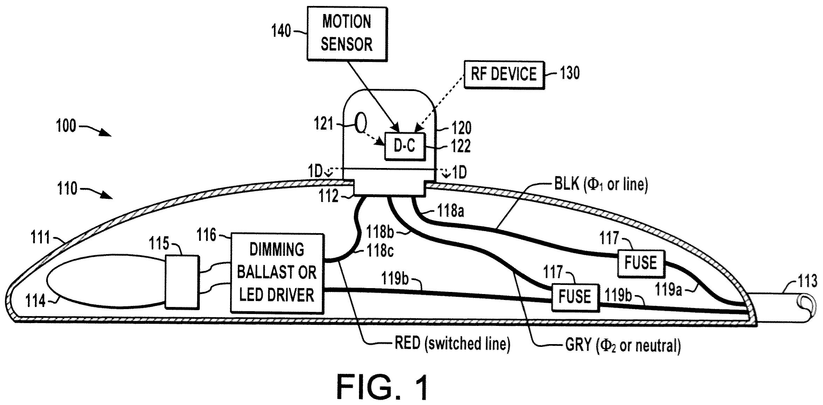

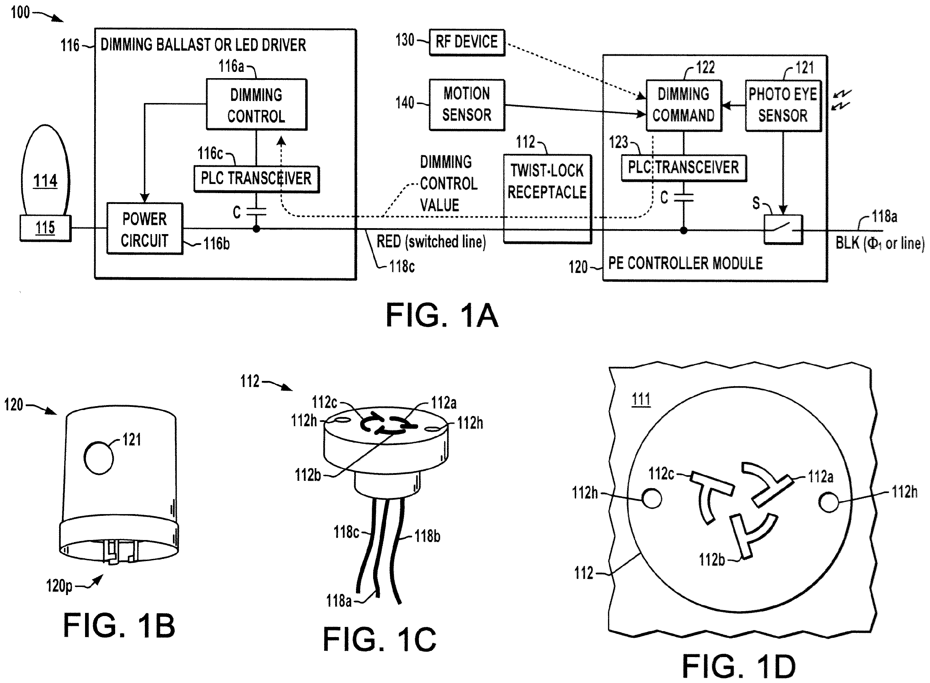

Referring initially to Figs. 1-1D, an exemplary outdoor lighting fixture apparatus 100 is illustrated, which includes a horizontal luminaire fixture assembly 110 comprised of a fixture housing structure 111 having an inlet conduit 113 for receiving power wiring, where the fixture housing 111 may be mounted to a building or to a pole or other support structure for a particular outdoor lighting application. One or more light sources 114 are supported in the fixture housing 111 via sockets 115, such as incandescent lamps, fluorescent lamps, high intensity discharge (HID) lamps, LEDs or arrays thereof, etc. The light source(s) 114 is driven by a ballast or driver 116, also supported in the housing 111. An EEI/NEMA standard 3-terminal polarized female twist-lock receptacle 112 (Figs. 1C and 1D) is mounted to the top of the fixture housing 111 for connection of a controller module 120 having a mating male twist-lock connector with three curved blade terminals 120p as shown in Fig. 1B. The male blades 120p of the module connector (Fig. 1B) engage corresponding arcuate female terminals via corresponding slots 112a, 112b, and 112c in the upper surface of the receptacle 112 (Fig. 1 C), and the receptacle 112 includes mounting holes 112h (Figs. 1C and 1D) for mounting the receptacle 112 to an upper surface of the housing 111 using screws (not shown). The controller module 120 in the illustrated example includes a photo sensor 121 operative to sense ambient light near the fixture assembly 110, preferable facing away from the light produced by the light source(s) 114, where the receptacle mounting may include one or more gaskets (not shown) for water-tight sealing against outside environmental conditions, and may provide means for rotation of the module 120 (not shown) such that the photo sensor (photo eye or PE) 121 faces a specific direction (e.g., North).

The twist-lock connector of the controller module 120 and the receptacle 112 of the fixture assembly provide electrical connection via three class 1 electrical connections, shown in Fig. 1 as wires 118a, 118b, and 118c. In the example of Fig. 1, two input wires 119a and 119b are routed into the housing 111 via the conduit 113 and are optionally terminates at fuses 117. As best seen in Fig. 1, a first phase (line) wire (e.g., black) 118a connects the power line from the first fuse 117 to a first receptacle terminal 112a, and a second phase (e.g., neutral) wire (e.g., gray in this example) 118b connects the power neutral to the second terminal 112b. The neutral is also connected from the second fuse 117 to the driver or ballast 116 via wire 119b. The power line is selectively switched by the controller module 120 and provided to the ballast or driver 116 via the third receptacle terminal 112c and a switched line wire 118c (red), such that the ballast or driver 116 is selectively powered or unpowered by the operation of the controller 120. As seen in Fig. 1A, moreover, the controller module 120 in one embodiment includes a switching device S operative according to a switch control signal to selectively couple the incoming line connection (black) 118a with the switched power line 118c (red).

As shown in Figs. 1 and 1A, the controller module 120 includes a dimming component (dimming command component) 122, which can be any suitable circuitry, hardware, processor-executed software or firmware, logic, etc., which operates to selectively provide one or more dimming control values to the ballast or driver 116 through the twist-lock receptacle 112 so as to cause the ballast or driver 116 to provide dimmable output from the light source(s) 114. The dimming component 122 is operatively coupled to the photo sensor 121 which senses ambient light proximate the fixture assembly 110 and provides a sensed light signal or value to the dimming component 122. The dimming component 122 selectively provides the dimming control value or values in certain embodiments based at least in part on the sensed light signal or value. For example, the dimming component 122 may be programmed or otherwise configured to provide dimmed light via the dimming control value selection at dawn and/or dusk for improved energy efficiency and for esthetic lighting, rather than the conventional full on/full off operation. In certain embodiments, moreover, the dimming component 122 may be operative to selectively dim the light output during certain times for energy conservation, for instance, to dim unused roadways to a safe but efficient level in the middle of the night.

In certain embodiments, the controller module 120 is operatively coupled with a motion sensor 124 (Fig. 1) to receive a wired or wireless signal therefrom indicating detected or sensed motion near and/or lit by the fixture 110, and the dimming component 122 is operative to selectively provide the dimming control value based at least in part on a sensed motion light signal or value from a motion sensor 140. For example, the dimming component 122 may increase a dimmed power level (or go to full-on operation from a previously dimmed setting) when motion is sensed and continue this modified operation for a predetermined time or until a separate reset command is received at the controller 120. In other embodiments, the dimming control signal can be varied for output light flashing operation based at least in part on a received motion detection signal from the sensor 140.

In certain embodiments, the dimming component 122 is operative to selectively provide the dimming control value based at least in part on a received RF signal or value from an external RF device 130. For instance, an RF command signal can be sent to the controller module 120 wirelessly (and such signal can be sent to multiple controllers 120) for initiating dimmed, full on, full off, flashing operation, or combinations thereof by a control device 130 having an RF transmitter, thus allowing security personnel to control outdoor lighting operation. The dimming component 122 may thus provide the dimming control value(s) to control the light output according to one or more criteria, some of which may be externally actuated (e.g., via the PE sensor 121, motion sensor 140, and/or RF device 130 or combinations thereof) and some of which may be preprogrammed in the controller module 120.

The dimming component 122, moreover, may provide one or more dimming control values through the twist-lock receptacle 112 to control the output light level by any suitable means, examples of which are illustrated and described in greater detail below.

As shown in Fig. 1A, in certain embodiments the ballast or driver 116 is a dimming ballast or driver with a dimming control circuit or component 116a that operates a power circuit 116b to provide two or more non-zero light output levels. The dimming ballast or driver 116 also includes a power line communication (PLC) transceiver component 116c that receives digital signals from the switched power line 118c via the twist-lock receptacle 112 and which may be operable to transmit digital signals on the switched power line to the controller module 120. The ballast or driver 116 may include a capacitance C or other means for AC coupling with the 50 or 60 Hz power line 118c for receipt and/or transmission of digital signals or information by any suitable protocol at any suitable transmission rate. As shown in Fig. 1A, moreover, the controller module 120 includes a power line communication PLC transceiver component 123 and coupling capacitance C operatively coupled with the dimming component 122 to transmit the dimming control value(s) as a digital signal on the power line 118c. In this manner, the controller 120 utilizes the switched power line of the receptacle 112 to provide the dimming control value to the dimming control element 116a of the ballast or driver 116 without modification of the twist-lock receptacle and connector pair.

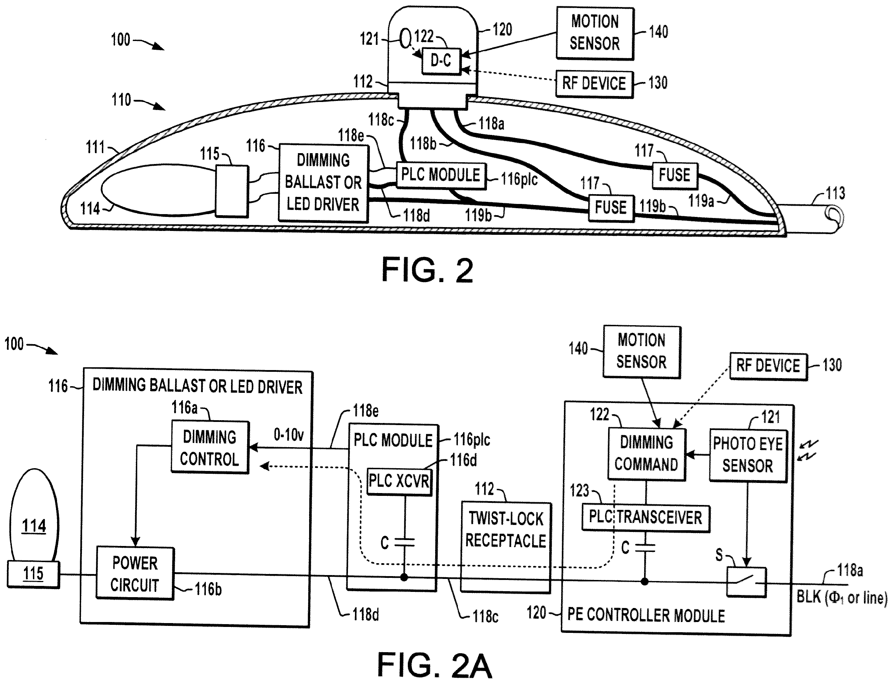

Referring to Figs. 2 and 2A, another exemplary dimmable outdoor lighting fixture apparatus 100 is illustrated using PLC transmission through the switched power terminal of the twist-lock receptacle 112 to provide dimming control values from the controller module 120 to a dimming ballast or driver 116. In this embodiment, the fixture assembly 110 includes a power line communication PLC module 116plc with a PLC transceiver component 116d coupled via a capacitance C with the switched power wire 118c to receive digital signals via the twist-lock receptacle 112. The PLC module 116plc in this case provides an analog dimming signal (e.g., 0-10 v in one possible implementation) via a wire 118e to a dimming control input of the ballast or driver 116 based on the received PLC digital signals. In addition, the switched line power is provided from the PLC module 116plc to the ballast or driver 116 via a class 12 wire 118d. As in the embodiment of Figs. 1-1D, the controller module 120 in Figs. 2 and 2A includes a power line communication PLC component 123 which transmits the dimming control value from the dimming component 122 as a digital signal on the switched power line 118c.

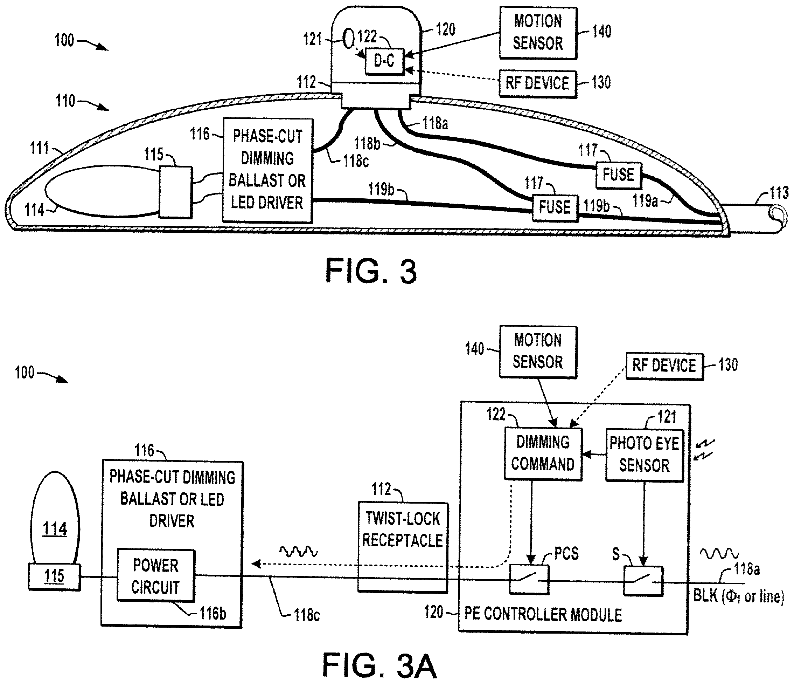

Another exemplary dimmable outdoor lighting fixture apparatus 100 is shown in Figs. 3 and 3A, in which a phase-cut ballast or driver 116 is used, having a power circuit 116b that receive a phase-cut power signal from the switched power line wire 118c via the twist-lock receptacle 112 and selectively dims the light source output accordingly. As best shown in Fig. 3A, the controller 120 includes a phase-cut switching device PCS operated under control of the dimming component 122 to generate the phase-cut power signal on receptacle wire 118c based in whole or in part on the dimming control value from the dimming component 122. The phase-cut signal can be constructed using a variety of techniques, such as delaying closure of the switch PCS a particular number of electrical degrees in each electrical input power cycle or half-cycle, or turning the switch PCS off a given number of electrical degrees after a zero crossing in each cycle or half-cycle, or other suitable phase-cutting technique compatible with the input requirements of the phase-cut dimming ballast or driver 116.

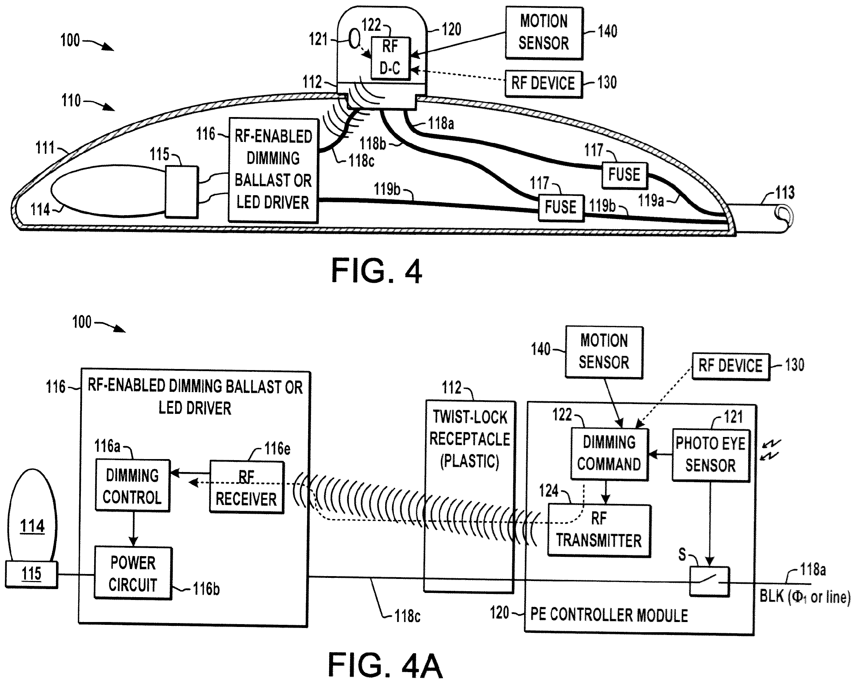

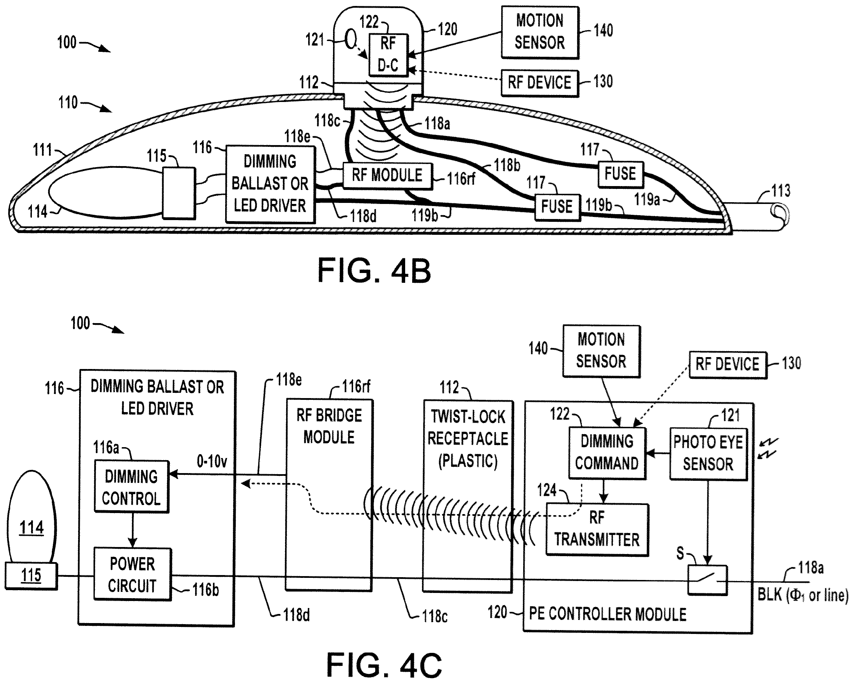

Referring now to Figs. 4-4C, the controller module 120 in certain embodiments provides the dimming control value(s) to the driver or ballast using wireless (e.g., RF) signal transmission through the twist-lock receptacle 112, where the receptacle 112 is typically constructed using plastic or other transmissive material allowing passage of wireless information between the controller module 120 and the ballast/driver or associated circuitry even though the housing 111 may be constructed of conductive (e.g., metal, aluminum, etc.) material. In Figs. 4 and 4A, the controller module 120 providing wireless dimming control values to an RF-enabled ballast or driver 116 through the twist-lock receptacle. The ballast or driver 116 includes an RF receiver 116c (Fig. 4A) that receives the dimming control value from the controller module 120 through the twist-lock receptacle 112, and the controller module 120 comprises a radio frequency RF transmitter 124 operatively coupled with the dimming component 122 to transmit the dimming control value as an RF signal through the twist-lock receptacle 112.

In the embodiment of Figs. 4B and 4C, an RF receiver bridge module 116rf is mounted in the fixture housing 111 and provides an analog dimming signal (e.g., 0-10v in one example) via wire 118e to a control component 116a of dimming ballast or driver 116 (Fig. 4C). In this embodiment, the RF module may be powered by the switched power line 118C or by the line wire 118A via a spliced connection (not shown) in the housing 111, and the switched line power may be provided to the ballast or driver 116 via a class 1 wire 118d.

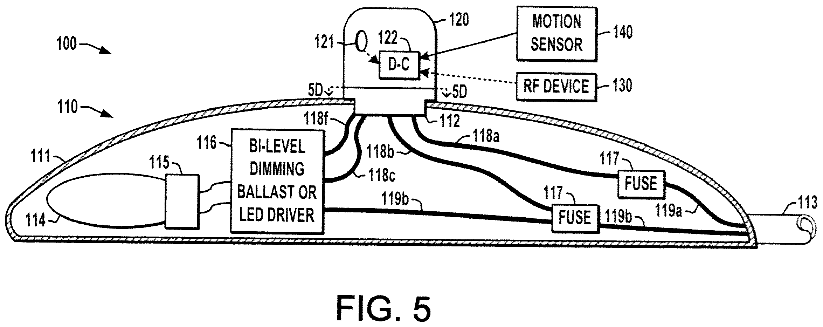

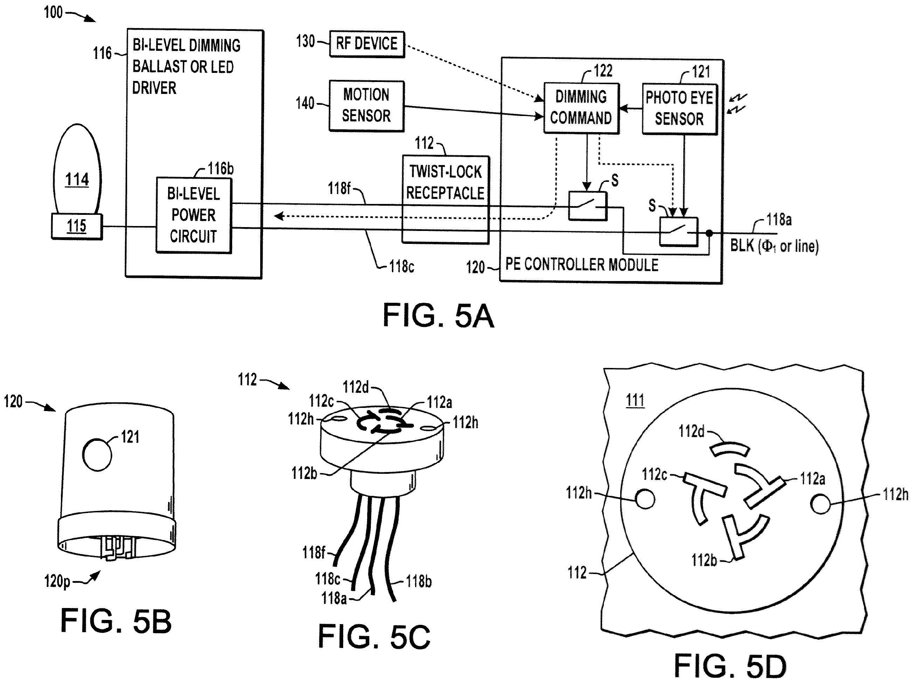

Figs. 5-8A illustrate various embodiments in which the twist-lock receptacle 112 is modified to include an additional (e.g., fourth) terminal 112d (Figs. 5C and 5D) and the mating connector of the controller module 120 includes a fourth blade connection (Fig. 5B) to engage the added receptacle terminal 112d, thereby allowing passage of a fourth class 1 connection through wire (e.g., wire 118f in Figs. 5A and 5C) from the module 120 to the interior of the fixture housing 111.

Figs. 5-5D show an exemplary dimmable outdoor lighting fixture apparatus 100 with the twist-lock receptacle 112 having a fourth terminal 112d (Figs. 5C and 5D), where the controller module 120 provides two power signals to inputs of a bi-level power circuit 116b of the ballast or driver 116 through the receptacle 112. The ballast or driver 116 in this example includes two power inputs coupled with terminals 112c and 112d of the twist-lock receptacle 112 via wires 118c and 118f, respectively. The ballast or driver 116 in the illustrated example provides two-level output from the light source 114 according to power levels of the power inputs, and the controller 120 sets the power levels of these power inputs through the twist-lock receptacle 112 via switches S (Fig. 5A). In other embodiments, the ballast 116 is operative to provide more than two non-zero dimming output levels, with the power inputs being binary coded or otherwise coded to indicate particular light output dimming levels.

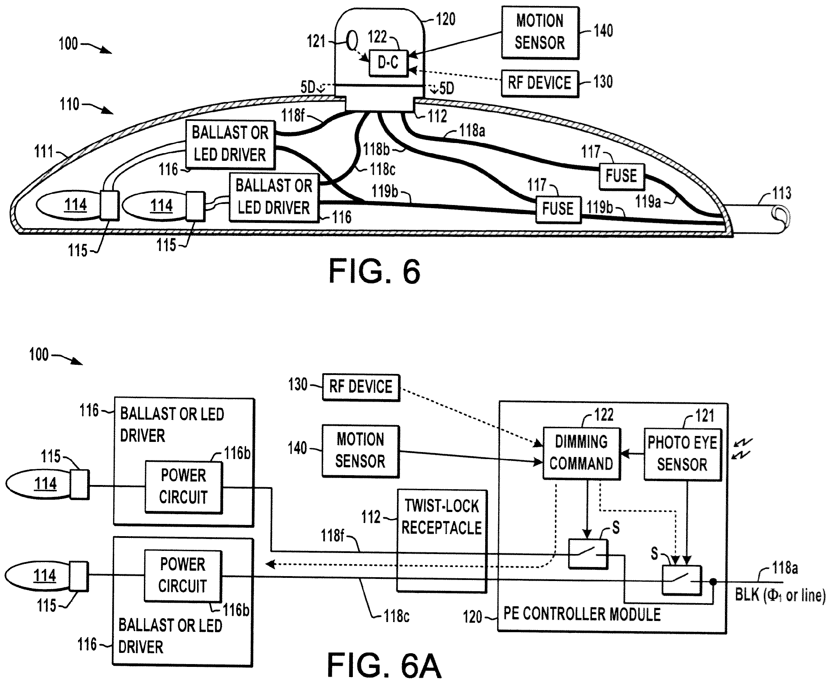

Another embodiment in Figs. 6 and 6A includes first and second light sources 114 supported in corresponding sockets of the fixture housing 111, with corresponding first and second ballasts or drivers 116b, each having its own power input. Other similar embodiments could have more than two light sources, each having a separate ballast or driver, or with some light sources 114 sharing a ballast or driver 116. In the example of Figs. 6 and 6A, the controller 120 sets the power levels of the two power inputs using switches S (or the PE sensor 121 may set one of the switch conditions), and the dimming component can thus implement stepped dimming control of the apparatus 100.

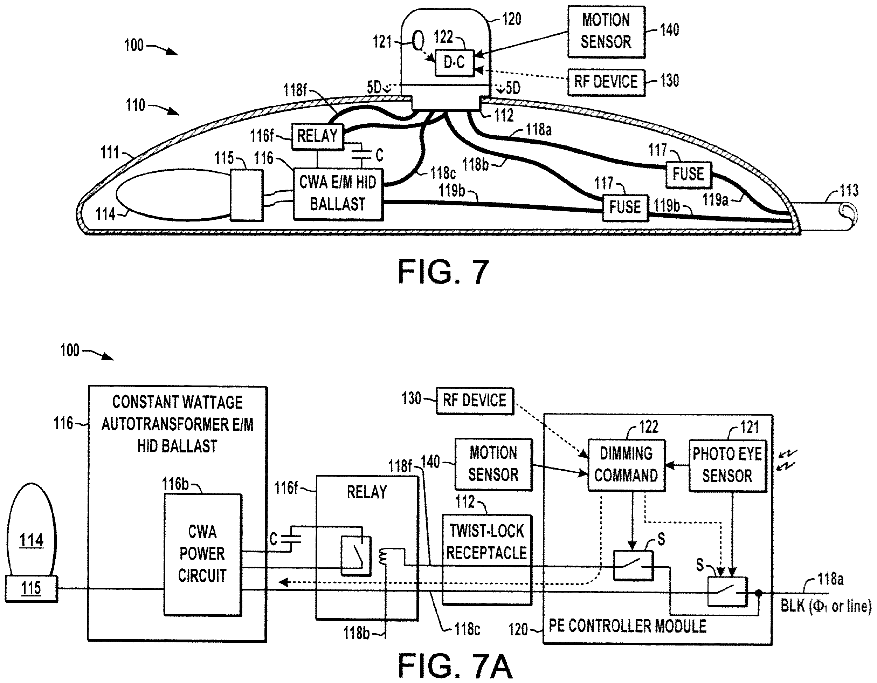

Figs. 7 and 7A illustrate another exemplary dimmable outdoor lighting fixture apparatus 100 in which where the controller 120 again provides separate switched power signals through the twist-lock receptacle using switching devices S, with a switched line coupled in the fixture housing 111 to the ballast 116. In this embodiment, a high intensity discharge HID lamp 114 is driven by a constant wattage autotransformer (CWA) HID ballast 116 with tap inputs to allow connection of an external capacitance to alter the output power level, and thus to modify the light output. The fixture assembly 110 in this embodiment includes a relay 116f with a coil circuit coupled with the second switched power line via wire 118f and to the fused neutral line via wire 118b (Fig. 7A), as well as a capacitor C coupled between the coil circuit and a control terminal of the CWA ballast 116. The controller 120 controls the power level of the switched power line of wire 118f and thereby selectively actuates the relay contact to selectively couple the capacitor C with the CWA HID ballast 116, thus providing controlled dimming of the HID lamp 114 output.

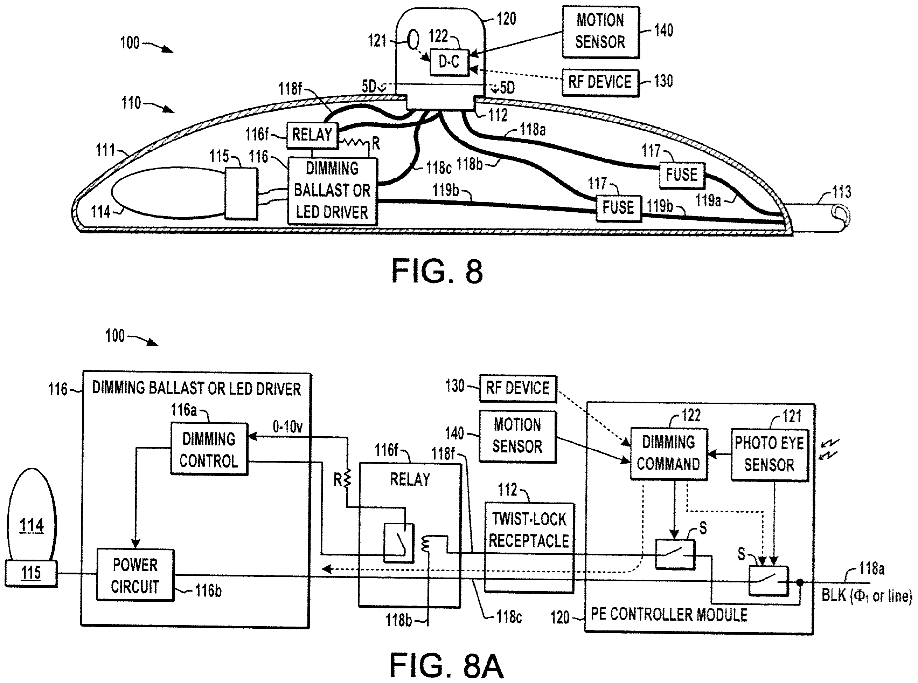

In Figs. 8 and 8A, a normal dimming ballast or driver 116 is used in the fixture housing 111, having an analog (e.g., 0-10v) dimming control input. In this case, the dimming input is self-powered, allowing modification of the dimming control level by connection of a resistance across first and second dimming control input terminals to a dimming control circuit 116a of the ballast or driver 116. The fixture assembly 110 again includes a relay 116f with a coil circuit coupled with the switched power terminals of the twist-lock receptacle 112 via wire 118f and the neutral via wire 118b. In addition, a resistor R is coupled between a relay contact circuit and a dimming control terminal of the dimmable ballast or driver 116. The controller 120 controls the power level of the wire 118f through the twist-lock receptacle 112 so as to selectively cause the relay to couple the resistor R with the dimmable ballast or driver 116, and thus to provide dimmable output from the light source 114.

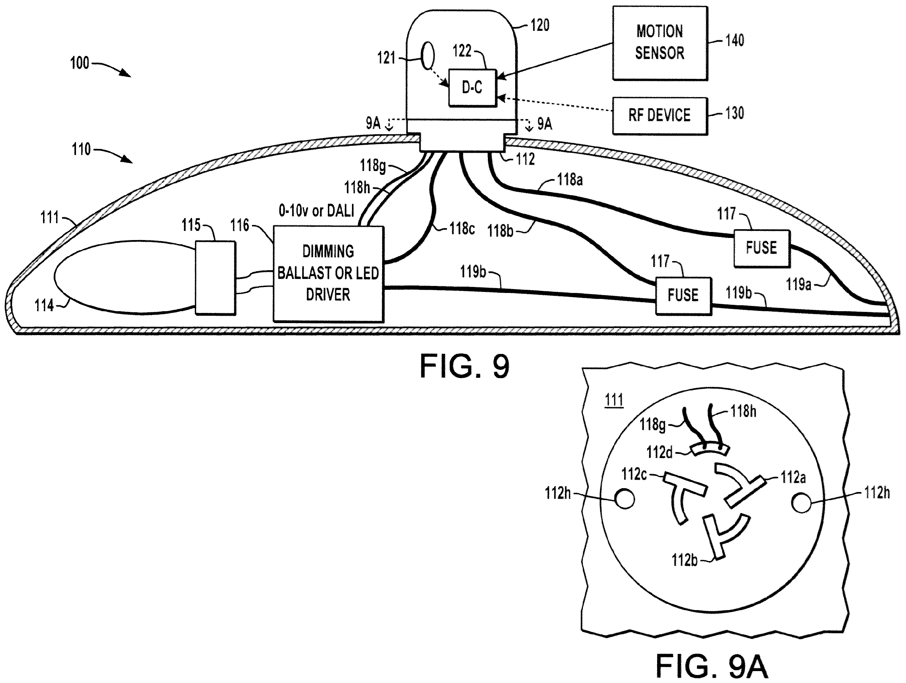

Referring now to Figs. 9 and 9A, another embodiment utilizes a modified twist-lock receptacle 112 with an added (e.g., fourth) opening 112d (shown in Fig. 9A). A pair of class 2 wires 118g, 118h are provided which extend through the receptacle opening 112d to couple an analog (e.g., 0-1 Ov) or digital (e.g., digital addressable lighting or DALI) dimming control signal or value from the dimming component 122 to the ballast or driver 116 through the twist-lock receptacle 112 using the class 2 wires 118g, 118h for dimmable light output.

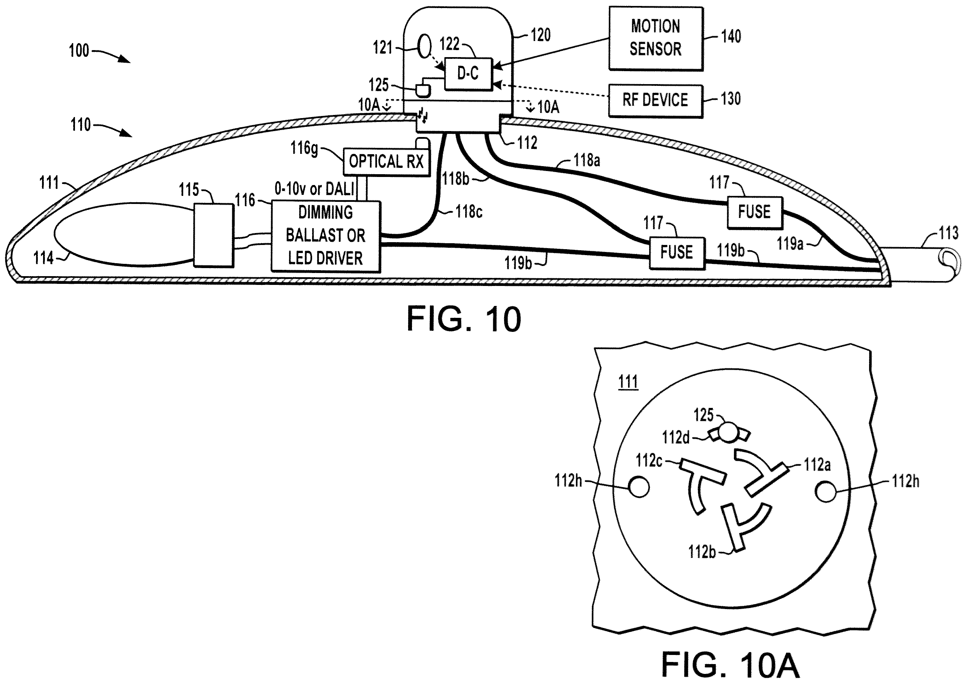

Figs. 10 and 10A show another exemplary fixture apparatus 100 with the ballast or driver receiving an optical dimming control value through an optical channel 112d in the twist-lock receptacle 112. The receptacle 112 in this case is modified to include an optical channel, such as opening 112d or such an opening with a fiber-optic line extending at least partially through the opening 112d for transmission of optical signals through the twist-lock receptacle 112. The ballast or driver 116 includes an optical receiver 116g operative to receive a dimming control value from the controller module 120 through the optical channel 112d and the controller module 120 includes an optical transmitter 125 operatively coupled with the dimming component 122 to transmit the dimming control value as an optical signal through the optical channel 112d. The optical receiver 116g, in turn, provides the dimming control value as an analog signal or digital value to the ballast or driver 116 for dimmable lighting operation of the apparatus 100.

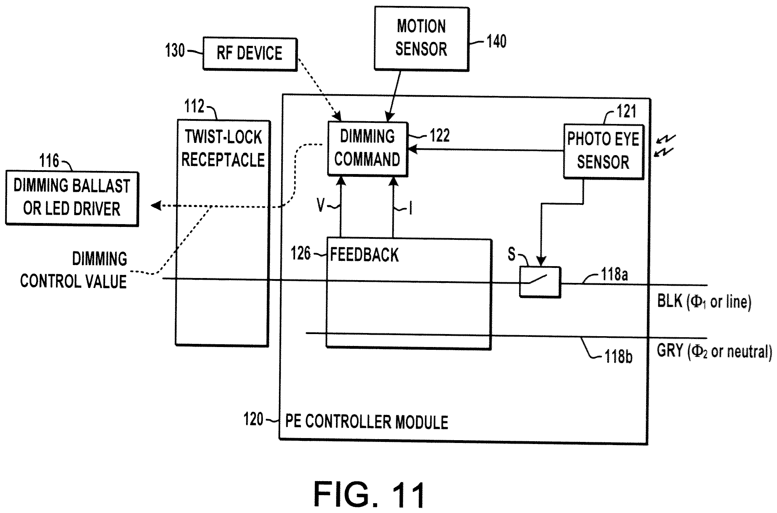

Fig. 11 shows another exemplary dimmable outdoor lighting fixture apparatus 100 with a feedback circuit 126 including a sensor to measure output current drawn by the ballast or driver, a sensor for measuring output voltage, or combinations of these or other sensing components to detect or sense one or more fixture power conditions. The feedback circuit 126 provides one or more such sensed power conditions as feedback signals or values (e.g., V, I, etc.) to the dimming component 122. The dimming component 122 in these embodiments selectively adjusts the dimming control value based at least in part on the sensed feedback power condition.

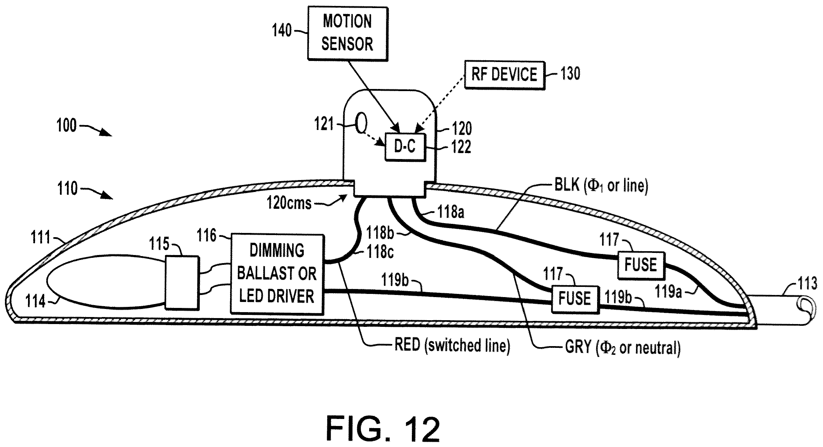

Fig. 12 illustrates another exemplary dimmable outdoor lighting fixture apparatus 100 with a luminaire fixture housing 111 that includes a socket mounting structure having a hole adapted to receive a twist-lock receptacle (e.g., receptacles 112 illustrated and described above). The socket mounting structure in certain embodiments include one or more holes for screws associated with EEI/NEMA standard 3-terminal polarized twist-lock receptacles. The fixture assembly 110 in this case also includes at least one light source 114 supported in the fixture housing 111, and one or more ballasts or drivers 116 supported in the housing 111 with appropriate electrically coupling to provide power to the light source 114. A controller module 120 in this embodiment includes a controller housing having a controller mounting structure 120cms mounted to the socket mounting structure, such as using screws driven upward from the interior of the fixture housing 111 into threaded cavities in the controller module housing, with wires extending from the controller housing interior through the twist-lock socket hole into the fixture housing 111. The controller module 120 also includes a dimming component 122 located in the controller housing, which operates to selectively provide at least one dimming control value to the ballast or driver 116 one or more of the wires passing through the fixture housing hole to cause the ballast or driver 116 to provide dimmable output from the light source 114 by any one or more of the above described techniques. One or both of the controller mounting structure 120cms and the socket mounting structure may, in certain embodiments, include a spring ring or other means to allow rotation of the controller module 120 to set any included photo eye sensor 121 Northward or any other desired direction, such as the spring ring apparatus found in conventional photo eye equipped modules. The controller module 120 in this embodiment may include any of the controller module functionality described above and the fixture assembly 110 may likewise include any of the components illustrated and described in the above embodiments to implement dimming control of an outdoor lighting fixture, where the controller module 120 provides the same fit and function as the socket receptacle 112 which can be removed for retrofit of existing fixture installations with a replacement controller module 120, with the existing receptacle 112 removed and the wires from the replacement controller 120 going directly in through the existing hole to connect using suitable wire nuts and terminals inside the interior of the fixture housing 111.

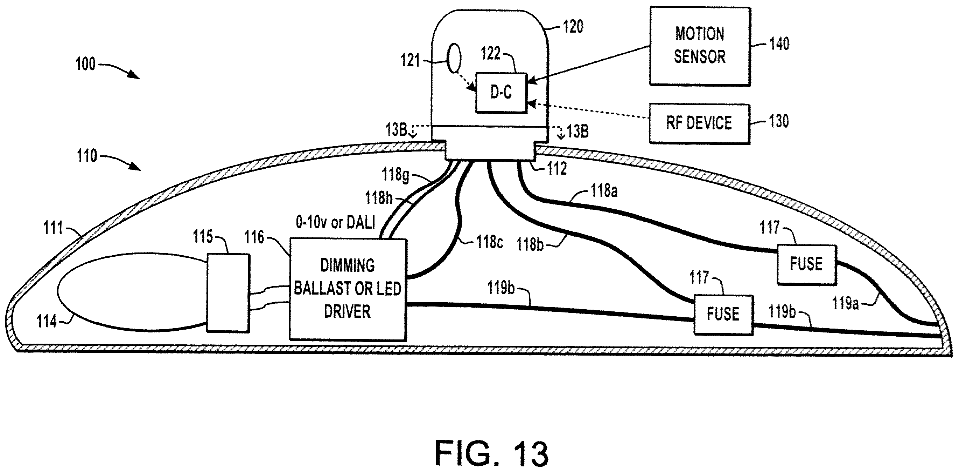

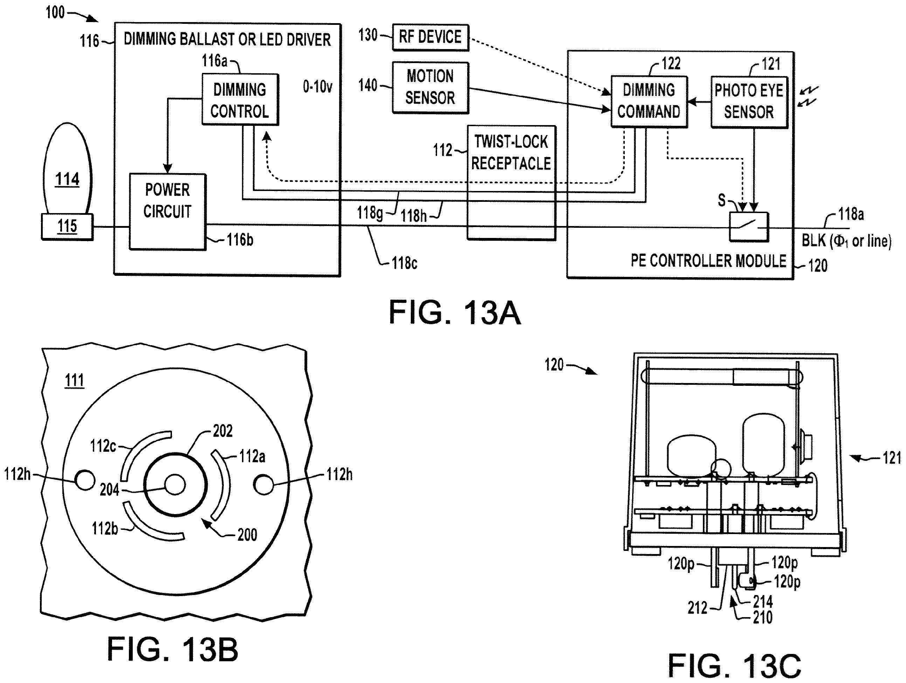

Figs. 13-13C illustrate a further embodiment in which the twist-lock receptacle 112 includes a connector 200 with first and second terminals 202, 204 and wires 118g and 118h are coupled from the first and second terminals 202, 204, respectively to the dimming ballast or driver 116. The connector 200 in this example is an RCA type female connector mounted at the center of the receptacle 112 such that rotatable engagement of a corresponding male connector of the controller module 120 is possible while accommodating rotational twisting engagement of the male blades 120p of the module connector with the corresponding arcuate female terminals via the slots 112a, 112b, and 112c in the upper surface of the receptacle 112. In the illustrated embodiment, the module 120 has a corresponding male RCA connector with a single centrally located pin 214 for engaging the second terminal 204 of the receptacle connector 200 as well as a cylindrical male connector for engaging the outer first terminal 202 of the connector 200. The dimming component 122 of the controller module 120 is connected to provide a 0-10v or DALI signaling to the terminals 202 and 204 via appropriate circuit connections with wires 118g and 118h conveying the dimming signal to the dimming control 116a of the ballast 116 to cause the ballast or driver 116 to provide dimmable output from the light source 114.

The above examples are merely illustrative of several possible embodiments of various aspects of the present disclosure, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (i.e., that is functionally equivalent), even though not structurally equivalent to the disclosed structure which performs the function in the illustrated implementations of the disclosure. In addition, although a particular feature of the disclosure may have been illustrated and/or described with respect to only one of several implementations, such feature may be combined with one or more other features of the other implementations as may be desired and advantageous for any given or particular application. Furthermore, references to singular components or items are intended, unless otherwise specified, to encompass two or more such components or items. Also, to the extent that the terms "including", "includes", "having", "has", "with", or variants thereof are used in the detailed description and/or in the claims, such terms are intended to be inclusive in a manner similar to the term "comprising". The invention has been described with reference to the preferred embodiments. Modifications and alterations will occur to others upon reading and understanding the preceding detailed description. It is intended that the invention be construed as including all such modifications and alterations.

## Claims

1. A dimmable outdoor lighting fixture apparatus (100), comprising:
a luminaire fixture assembly (110) comprising:
a fixture housing (111),
at least one light source (114) supported in the fixture housing (111),
at least one ballast or driver (116) supported in the fixture housing (111) and electrically coupled to provide power to the light source (114), and
a 3-terminal twist-lock receptacle (112) mounted to the fixture housing (111) and operative to receive a twist-lock connector;
a controller module (120), comprising:
a twist-lock type connector operatively coupled to the twist-lock receptacle and providing three class 1 electrical connections (118a-c) between the controller module (120) and the fixture assembly (110),
a dimming component operative (122) to selectively provide at least one dimming control value to the ballast or driver (116) through the twist-lock receptacle (112) to cause the ballast or driver (116) to provide dimmable output from the light source (114); and
a photo sensor (121) operative to sense ambient light proximate the fixture assembly (110) and to provide a sensed light signal or value to the dimming component (122), and where the dimming component (122) is operative to selectively provide the dimming control value based at least in part on the sensed light signal or value.

2. The apparatus of claim 1, where the dimming component (122) is operative to selectively provide the dimming control value based at least in part on a sensed motion light signal or value from a motion sensor (140) or on a received RF signal or value from an external RF device (130).

3. The apparatus of any of claims 1 or 2, where the ballast or driver (116) comprises a power line communication (PLC) component (116c) operative to receive digital signals from a power line (118c) via the twist-lock receptacle (112), and where the controller module (120) comprises a power line communication (PLC) component (123) operatively coupled with the dimming component (122) to transmit the dimming control value as a digital signal on the power line (118c).

4. The apparatus of any of claims 1 to 3, where the fixture assembly (110) comprises a power line communication (PLC) module (116 pcl) operative to receive digital signals from a power line via the twist-lock receptacle (112) and to provide an analog dimming signal to the ballast or driver (116) based on the received digital signals, and where the controller module (120) comprises a power line communication (PLC) component operatively coupled with the dimming component (123) to transmit the dimming control value as a digital signal on the power line (118c).

5. The apparatus of any of claims 1 to 4, where the ballast or driver (116) is a phase-cut ballast or driver with a power circuit (116b) operative to receive a phase-cut power signal from a power line (118c) via the twist-lock receptacle (112) and to selectively dim the output from the light source (114) according to the phase-cut power signal, and where the controller module comprises a phase-cut switching device (PCS) operative to generate the phase-cut power signal based at least in part on the dimming control value from the dimming component (122).

6. The apparatus of any of claims 1 to 4, where the ballast or driver (116) comprises a radio frequency (RF) receiver (116e) operative to receive a dimming control value from the controller module (120) through the twist-lock receptacle (112), and where the controller module (120) comprises a radio frequency (RF) transmitter operatively coupled with the dimming component to transmit the dimming control value as an RF signal through the twist-lock receptacle (112).

7. The apparatus of any of claims 1 to 4, where the twist-lock receptacle (112) is modified to include a fourth terminal (122d), where the fixture assembly (110) comprises:
first and second light sources (114) supported in the fixture housing (111);
a first ballast or driver (116b) comprising a first power input and being electrically coupled to selectively provide power to the first light source (114) according to the first power input; and
a second ballast or driver (116b) comprising a second power input and being electrically coupled to selectively provide power to the second light source according to the second power input; and
where the controller module (120) controls the power levels of the at least two power inputs through the twist-lock receptacle.

8. The apparatus of any of claims 1 to 4, where the twist-lock receptacle (112) is modified to include a fourth terminal (112d), where the light source is a high intensity discharge (HID) lamp (114), where the ballast or driver is a constant wattage autotransformer (CWA) HID ballast (116), where the fixture assembly comprises:
a relay (116f) having a coil circuit with at least one power input (118f) coupled with a terminal of the twist-lock receptacle (112); and
a capacitor coupled between a relay contact and a control terminal of the CWA HID ballast (116); and
where the controller module (120) controls the power level of the at least one power input (118f) through the twist-lock receptacle (112) to selectively cause the relay (116f) to couple the capacitor with the CWA HID ballast (116) to provide dimmable output from the HID lamp (114).

9. The apparatus of any of claims 1 to 4, where the twist-lock receptacle (112) is modified to include a fourth terminal, where the ballast or driver is a dimmable ballast or driver, where the fixture assembly comprises:
a relay (116f) having a coil circuit with at least one power input (118f) coupled with a terminal of the twist-lock receptacle (112); and
a resistor coupled between a relay contact (116f) and a control terminal of the dimmable ballast or driver (116); and
where the controller module (120) controls the power level of the at least one power input through the twist-lock receptacle (112) to selectively cause the relay (116f) to couple the resistor with the dimmable ballast (116) or driver to provide dimmable output from the light source (114).

10. A method of operating an outdoor lighting fixture assembly (110), the method comprising:
providing at least one light source (114) and at least one ballast or driver (116) in a luminaire fixture housing (111);
providing a controller module (120) attached to the fixture housing (111) and coupled with the ballast or driver (116), the controller module comprising a dimming component (122);
sensing ambient light proximate the fixture assembly (110) and providing a sensed light signal or value to a dimming component (122) of the controller module (120); and
providing at least one dimming control value, based at least in part on the sensed light signal or value, to the ballast or driver (116) from the dimming component (122) of the controller module (120) through a twist-lock receptacle (112) to cause the ballast or driver (116) to provide dimmable output from the light source (114).

11. The method of claim 10, further comprising:
sensing motion proximate the fixture assembly (110); and
providing the dimming control value based at least in part on the sensed motion.

12. The method of any of claims 10 or 11, further comprising:
receiving an RF signal or value from an external RF device (130); and
providing the dimming control value based at least in part on the received RF signal or value.

13. The method of any of claims 10 to 12, where the dimming control value is provided based at least in part on a current time.

## Patentansprüche

1. Dimmbare Außenbeleuchtungsausstattungseinrichtung (100), die Folgendes umfasst:
eine Leuchtenausstattungsbaugruppe (110), die Folgendes umfasst:
ein Ausstattungsgehäuse (111),
wenigstens eine Lichtquelle (114), die in dem Ausstattungsgehäuse (111) gehalten wird,
wenigstens ein Vorschaltgerät oder einen Treiber (116), das oder der in dem Ausstattungsgehäuse (111) gehalten wird und elektrisch gekoppelt ist, um Strom an die Lichtquelle (114) zu liefern, und
eine Drehverschlussaufnahme (112) mit 3 Anschlüssen, die an das Ausstattungsgehäuse (111) montiert und betriebsfähig ist, einen Drehverschlussstecker aufzunehmen,
ein Steuermodul (120), das Folgendes umfasst:
einen Stecker des Drehverschlusstyps, der wirkend mit der Drehverschlussaufnahme gekoppelt wird und drei elektrische Schutzklasse-I-Verbindungen (118a-c) zwischen dem Steuermodul (120) und der Ausstattungsbaugruppe (110) bereitstellt,
eine Dimmkomponente (122), die betriebsfähig ist, wenigstens einen Dimmsteuerwert selektiv durch die Drehverschlussaufnahme (112) an das Vorschaltgerät oder den Treiber (116) zu liefern, so dass veranlasst wird, dass das Vorschaltgerät oder der Treiber (116) eine dimmbare Ausgabe von der Lichtquelle (114) bereitstellt; und
einen Lichtsensor (121), der betriebsfähig ist, Umgebungslicht nahe der Ausstattungsbaugruppe (110) zu erfassen und ein Signal oder einen Wert des erfassten Lichts an die Dimmkomponente (122) zu liefern, und wobei die Dimmkomponente (122) betriebsfähig ist, den Dimmsteuerwert wenigstens teilweise auf dem Signal oder dem Wert des erfassten Lichts basierend selektiv bereitzustellen.

2. Einrichtung nach Anspruch 1, wobei die Dimmkomponente (122) betriebsfähig ist, den Dimmsteuerwert wenigstens teilweise auf einem Signal oder Wert des erfassten Bewegungslichts von einem Bewegungssensor (140) oder auf einem empfangenen HF-Signal oder -Wert von einer externen HF-Vorrichtung (130) basierend selektiv bereitzustellen.

3. Einrichtung nach Anspruch 1 oder 2, wobei das Vorschaltgerät oder der Treiber (116) eine Stromleitungskommunikations(PLC)-Komponente (116c) umfasst, die betriebsfähig ist, digitale Signale von einer Stromleitung (118c) mittels der Drehverschlussaufnahme (112) zu empfangen, und wobei das Steuermodul (120) eine Stromleitungskommunikations(PLC)-Komponente (123) umfasst, die wirkend mit der Dimmkomponente (122) gekoppelt ist, um den Dimmsteuerwert als ein digitales Signal auf der Stromleitung (118c) zu übertragen.

4. Einrichtung nach einem der Ansprüche 1 bis 3, wobei die Ausstattungsbaugruppe (110) ein Stromleitungskommunikations(PLC)-Modul (116 pcl) umfasst, das betriebsfähig ist, digitale Signale von einer Stromleitung mittels der Drehverschlussaufnahme (112) zu empfangen und ein analoges Dimmsignal an das Vorschaltgerät oder den Treiber (116) auf den empfangenen digitalen Signalen basierend zu liefern, und wobei das Steuermodul (120) eine Stromleitungskommunikations(PLC)-Komponente umfasst, die wirkend mit der Dimmkomponente (123) gekoppelt ist, um den Dimmsteuerwert als ein digitales Signal in der Stromleitung (118c) zu übertragen.

5. Einrichtung nach einem der Ansprüche 1 bis 4, wobei das Vorschaltgerät oder der Treiber (116) ein Phasenanschnittvorschaltgerät oder -treiber mit einer Stromschaltung (116b) ist, das oder der betriebsfähig ist, ein Phasenanschnittstromsignal von einer Stromleitung (118c) mittels der Drehverschlussaufnahme (112) zu empfangen und die Ausgabe von der Lichtquelle (114) gemäß dem Phasenanschnittstromsignal selektiv zu dimmen, und wobei das Steuermodul eine Phasenanschnittschaltvorrichtung (PCS) umfasst, die betriebsfähig ist, das Phasenanschnittstromsignal wenigstens teilweise auf dem Dimmsteuerwert von der Dimmkomponente (122) basierend zu erzeugen.

6. Einrichtung nach einem der Ansprüche 1 bis 4, wobei das Vorschaltgerät oder der Treiber (116) einen Hochfrequenz(HF)-Empfänger (116e) umfasst, der betriebsfähig ist, einen Dimmsteuerwert durch die Drehverschlussaufnahme (112) von dem Steuermodul (120) zu empfangen, und wobei das Steuermodul (120) einen Hochfrequenz(HF)-Sender umfasst, der wirkend mit der Dimmkomponente gekoppelt ist, um den Dimmsteuerwert als ein HF-Signal durch die Drehverschlussaufnahme (112) zu übertragen.

7. Einrichtung nach einem der Ansprüche 1 bis 4, wobei die Drehverschlussaufnahme (112) so modifiziert ist, dass sie einen vierten Anschluss (122d) beinhaltet, wobei die Ausstattungsbaugruppe (110) Folgendes umfasst:
eine erste und zweite Lichtquelle (114), die in dem Ausstattungsgehäuse (111) gehalten werden;
ein erstes Vorschaltgerät oder einen ersten Treiber (116b), das oder der einen ersten Stromeingang umfasst und elektrisch gekoppelt ist, um Strom gemäß dem ersten Stromeingang selektiv an die erste Lichtquelle (114) zu liefern; und
ein zweites Vorschaltgerät oder einen zweiten Treiber (116b), das oder der einen zweiten Stromeingang umfasst und elektrisch gekoppelt ist, um Strom gemäß dem zweiten Stromeingang selektiv an die zweite Lichtquelle zu liefern; und
wobei das Steuermodul (120) die Strompegel der wenigstens zwei Stromeingänge durch die Drehverschlussaufnahme steuert.

8. Einrichtung nach einem der Ansprüche 1 bis 4, wobei die Drehverschlussaufnahme (112) so modifiziert ist, dass sie einen vierten Anschluss (112d) beinhaltet, wobei die Lichtquelle eine Gasentladungslampe (114) mit hoher Intensität (HID) ist, wobei das Vorschaltgerät oder der Treiber ein Konstantleistungsspartransformator(CAW)-HID-Vorschaltgerät (116) ist, wobei die Ausstattungsbaugruppe Folgendes umfasst:
ein Relais (116f), das eine Spulenschaltung mit wenigstens einem Stromeingang (118f), der mit einem Anschluss der Drehverschlussaufnahme (112) gekoppelt ist, aufweist; und
einen Kondensator, der zwischen einem Relaiskontakt und einem Steueranschluss des CWA-HID-Vorschaltgeräts (116) geschaltet ist; und
wobei das Steuermodul (120) den Strompegel des wenigstens einen Stromeingangs (118f) durch die Drehverschlussaufnahme (112) steuert, um selektiv zu veranlassen, dass das Relais (116f) den Kondensator mit dem CWA-HID-Vorschaltgerät (116) koppelt, um eine dimmbare Ausgabe von der HID-Lampe (114) bereitzustellen.

9. Einrichtung nach einem der Ansprüche 1 bis 4, wobei die Drehverschlussaufnahme (112) so modifiziert ist, dass sie einen vierten Anschluss beinhaltet, wobei das Vorschaltgerät oder der Treiber ein dimmbares Vorschaltgerät oder ein dimmbarer Treiber ist, wobei die Ausstattungsbaugruppe Folgendes umfasst:
ein Relais (116f), das eine Spulenschaltung mit wenigstens einem Stromeingang (118f), der mit einem Anschluss der Drehverschlussaufnahme (112) gekoppelt ist, aufweist; und
einen Widerstand, der zwischen einem Relaiskontakt (116f) und einem Steueranschluss des dimmbaren Vorschaltgeräts oder Treibers (116) geschaltet ist; und
wobei das Steuermodul (120) den Strompegel des wenigstens einen Stromeingangs durch die Drehverschlussaufnahme (112) steuert, so dass selektiv veranlasst wird, dass das Relais (116f) den Widerstand mit dem dimmbaren Vorschaltgerät oder Treiber (116) koppelt, um eine dimmbare Ausgabe von der Lichtquelle (114) bereitzustellen.

10. Verfahren zum Betreiben einer Außenbeleuchtungsausstattungsbaugruppe (110), wobei das Verfahren Folgendes umfasst:
Bereitstellen wenigstens einer Lichtquelle (114) und wenigstens eines Vorschaltgeräts oder Treibers (116) in einem Leuchtenausstattungsgehäuse (111);
Bereitstellen eines Steuermoduls (120), das an dem Ausstattungsgehäuse (111) angebracht und mit dem Vorschaltgerät oder Treiber (116) gekoppelt ist, wobei das Steuermodul eine Dimmkomponente (122) umfasst;
Erfassen von Umgebungslicht nahe der Ausstattungsbaugruppe (110) und Liefern eines Signals oder Werts von erfasstem Licht an eine Dimmkomponente (122) des Steuermoduls (120); und
Liefern von wenigstens einem Dimmsteuerwert, der wenigstens teilweise auf dem Signal oder Wert des erfassten Lichts basiert, von der Dimmkomponente (122) des Steuermoduls (120) durch eine Drehverschlussaufnahme (112) an das Vorschaltgerät oder den Treiber (116), um zu veranlassen, dass das Vorschaltgerät oder der Treiber (116) eine dimmbare Ausgabe von der Lichtquelle (114) bereitstellt.

11. Verfahren nach Anspruch 10, das ferner Folgendes umfasst:
Erfassen von Bewegung nahe der Ausstattungsbaugruppe (110); und
Bereitstellen des Dimmsteuerwerts wenigstens teilweise auf der erfassten Bewegung basierend.

12. Verfahren nach einem der Ansprüche 10 oder 11, das Ferner Folgendes umfasst:
Empfangen eines HF-Signals oder HF-Werts von einer externen HF-Vorrichtung (130); und
Bereitstellen des Dimmsteuerwerts wenigstens teilweise auf dem empfangenen HF-Signal oder HF-Wert basierend.

13. Verfahren nach einem der Ansprüche 10 bis 12, wobei der Dimmsteuerwert wenigstens teilweise auf einer momentanen Zeit basierend bereitgestellt wird.

## Revendications

1. Appareil d'éclairage extérieur à intensité variable (100), comprenant :
un ensemble appareil luminaire (110) comprenant :
un boîtier d'appareil (111),
au moins une source de lumière (114) maintenue dans le boîtier d'appareil (111),
au moins un ballast ou gestionnaire (116) maintenu dans le boîtier d'appareil (111) et électriquement couplé pour alimenter la source de lumière (114), et
une prise à verrouillage par rotation à 3 bornes (112) montée sur le boîtier d'appareil (111) et fonctionnelle pour recevoir un connecteur verrouillable par rotation ;
un module de contrôleur (120), comprenant :
un connecteur de type verrouillage par rotation fonctionnellement couplé à la prise à verrouillage par rotation et fournissant trois connexions électriques de classe 1 (118a-c) entre le module de contrôleur (120) et l'ensemble appareil (110),
un composant variateur d'intensité (122) fonctionnel pour délivrer sélectivement au moins une valeur de commande de variation d'intensité au ballast ou gestionnaire (116) par le biais de la prise à verrouillage par rotation (112) pour amener le ballast ou gestionnaire (116) à délivrer une sortie d'intensité variable depuis la source de lumière (114) ; et
un photocapteur (121) fonctionnel pour détecter la lumière ambiante à proximité de l'ensemble appareil (110) et pour délivrer un signal ou une valeur de lumière détectée au composant variateur d'intensité (122), le composant variateur d'intensité (122) étant fonctionnel pour délivrer sélectivement la valeur de commande de variation d'intensité au moins en partie en fonction du signal ou de la valeur de lumière détectée.

2. Appareil de la revendication 1, dans lequel le composant variateur d'intensité (122) est fonctionnel pour délivrer sélectivement la valeur de commande de variation d'intensité au moins en partie en fonction d'un signal lumineux ou d'une valeur de mouvement détecté provenant d'un capteur de mouvement (140) ou d'un signal ou d'une valeur reçus provenant d'un dispositif RF externe (130).

3. Appareil de l'une quelconque des revendications 1 ou 2, dans lequel le ballast ou gestionnaire (116) comprend un composant de communication par courants porteurs en ligne (CPL) (116c) fonctionnel pour recevoir des signaux numériques provenant d'une ligne électrique (118c) par le biais de la prise à verrouillage par rotation (112), et dans lequel le module de contrôleur (120) comprend un composant de communication par courants porteurs en ligne (CPL) (123) fonctionnellement couplé au composant variateur d'intensité (122) pour transmettre la valeur de commande de variation d'intensité sous la forme d'un signal numérique sur la ligne électrique (118c).

4. Appareil de l'une quelconque des revendications 1 à 3, dans lequel l'ensemble appareil (110) comprend un module de communication par courants porteurs en ligne (CPL) (116 pcl) fonctionnel pour recevoir des signaux numériques provenant d'une ligne électrique par le biais de la prise à verrouillage par rotation (112) et pour délivrer un signal analogique de variation d'intensité au ballast ou gestionnaire (116) en fonction des signaux numériques reçus, et dans lequel le module de contrôleur (120) comprend un composant de communication par courants porteurs en ligne (CPL) fonctionnellement couplé au composant variateur d'intensité (123) pour transmettre la valeur de commande de variation d'intensité sous la forme d'un signal numérique sur la ligne électrique (118c).

5. Appareil de l'une quelconque des revendications 1 à 4, dans lequel le ballast ou gestionnaire (116) est un ballast ou gestionnaire à coupure de phase avec un circuit électrique (116b) fonctionnel pour recevoir un signal électrique de coupure de phase provenant d'une ligne électrique (118c) par le biais de la prise à verrouillage par rotation (112) et pour faire varier sélectivement la sortie de la source de lumière (114) en fonction du signal électrique de coupure de phase, et dans lequel le module de contrôleur comprend un dispositif de commutation à coupure de phase (PCS) fonctionnel pour générer le signal électrique de coupure de phase au moins en partie en fonction de la valeur de commande de variation d'intensité provenant du composant variateur d'intensité (122).

6. Appareil de l'une quelconque des revendications 1 à 4, dans lequel le ballast ou gestionnaire (116) comprend un récepteur radiofréquence (RF) (116e) fonctionnel pour recevoir une valeur de commande de variation d'intensité provenant du module de contrôleur (120) par le biais de la prise à verrouillage par rotation (112), et dans lequel le module de contrôleur (120) comprend un émetteur radiofréquence (RF) fonctionnellement couplé au composant variateur d'intensité pour transmettre la valeur de commande de variation d'intensité sous la forme d'un signal RF par le biais de la prise à verrouillage par rotation (112).

7. Appareil de l'une quelconque des revendications 1 à 4, dans lequel la prise à verrouillage par rotation (112) est modifiée pour comporter une quatrième borne (122d), l'ensemble appareil (110) comprenant :
des première et deuxième sources de lumière (114) maintenues dans le boîtier d'appareil (111) ;
un premier ballast ou gestionnaire (116b) comprenant une première entrée électrique et étant électriquement couplé pour alimenter sélectivement la première source de lumière (114) en fonction de la première entrée électrique ; et
un deuxième ballast ou gestionnaire (116b) comprenant une deuxième entrée électrique et étant électriquement couplé pour alimenter sélectivement la deuxième source de lumière en fonction de la deuxième entrée électrique ; et
dans lequel le module de contrôleur (120) contrôle les niveaux de puissance des au moins deux entrées électriques par le biais de la prise à verrouillage par rotation.

8. Appareil de l'une quelconque des revendications 1 à 4, dans lequel la prise à verrouillage par rotation (112) est modifiée pour comporter une quatrième borne (112d), dans lequel la source de lumière est une lampe à décharge à haute intensité (HID) (114), dans lequel le ballast ou gestionnaire est un ballast HID à autotransformateur à puissance régulée (CWA) (116), dans lequel l'ensemble appareil comprend :
un relais (116f) ayant un circuit à bobine avec au moins une entrée électrique (118f) couplée à une borne de la prise à verrouillage par rotation (112) ; et
un condensateur couplé entre un contact de relais et une borne de contrôle du ballast HID CWA (116) ; et
dans lequel le module de contrôleur (120) contrôle le niveau de puissance de l'au moins une entrée électrique (118f) par le biais de la prise à verrouillage par rotation (112) pour amener sélectivement le relais (116f) à coupler le condensateur au ballast HID CWA (116) pour délivrer une sortie d'intensité variable depuis la lampe HID (114).

9. Appareil de l'une quelconque des revendications 1 à 4, dans lequel la prise à verrouillage par rotation (112) est modifiée pour comporter une quatrième borne, dans lequel le ballast ou gestionnaire est un ballast ou gestionnaire à intensité variable, dans lequel l'ensemble appareil comprend :
un relais (116f) ayant un circuit à bobine avec au moins une entrée électrique (118f) couplée à une borne de la prise à verrouillage par rotation (112) ; et
une résistance couplée entre un contact de relais (116f) et une borne de contrôle du ballast ou gestionnaire à intensité variable (116) ; et
dans lequel le module de contrôleur (120) contrôle le niveau de puissance de l'au moins une entrée électrique par le biais de la prise à verrouillage par rotation (112) pour amener sélectivement le relais (116f) à coupler la résistance au ballast ou gestionnaire à intensité variable (116) pour délivrer une sortie d'intensité variable depuis la source de lumière (114).

10. Procédé de fonctionnement d'un ensemble appareil d'éclairage extérieur (110), le procédé comprenant les étapes suivantes :
se procurer au moins une source de lumière (114) et au moins un ballast ou gestionnaire (116) dans un boîtier d'appareil luminaire (111) ;
se procurer un module de contrôleur (120) fixé au boîtier d'appareil (111) et couplé au ballast ou gestionnaire (116), le module de contrôleur comprenant un composant variateur d'intensité (122) ;
détecter la lumière ambiante à proximité de l'ensemble appareil (110) et délivrer un signal ou une valeur de lumière détectée à un composant variateur d'intensité (122) du module de contrôleur (120) ; et
délivrer au moins une valeur de commande de variation d'intensité au moins en partie en fonction du signal ou de la valeur de lumière détectée au ballast ou gestionnaire (116) depuis le composant variateur d'intensité (122) du module de contrôleur (120) par le biais d'une prise à verrouillage par rotation (112) pour amener le ballast ou gestionnaire (116) à délivrer une sortie d'intensité variable depuis la source de lumière (114).

11. Procédé de la revendication 10, comprenant en outre les étapes suivantes :
détecter un mouvement à proximité de l'ensemble appareil (110) ; et
délivrer la valeur de commande de variation d'intensité au moins en partie en fonction du mouvement détecté.

12. Procédé de l'une quelconque des revendications 10 ou 11, comprenant en outre les étapes suivantes :
recevoir un signal ou une valeur RF provenant d'un dispositif RF externe (130) ; et
délivrer la valeur de commande de variation d'intensité au moins en partie en fonction du signal ou de la valeur RF reçus.

13. Procédé de l'une quelconque des revendications 10 à 12, dans lequel la valeur de commande de variation d'intensité est délivrée au moins en partie en fonction d'une heure en cours.
